Europäisches Patentamt

European Patent Office

Office européen des brevets

(19)

(11) Numéro de publication : **0 320 327 B1**

(12) **FASCICULE DE BREVET EUROPEEN**

(45) Date de publication du fascicule du brevet :
08.05.91 Bulletin 91/19

(51) Int. Cl.⁵ : **F16B 37/12**

(21) Numéro de dépôt : **88402935.6**

(22) Date de dépôt : **23.11.88**

(54) **Dispositif de fixation d'une première pièce telle qu'accessoire à une deuxième pièce telle que support à douille de rattrapage du jeu d'assemblage entre les deux pièces et douille utilisée pour la fixation de ces pièces.**

(30) Priorité : **07.12.87 FR 8716987**

(43) Date de publication de la demande :
**14.06.89 Bulletin 89/24**

(45) Mention de la délivrance du brevet :
**08.05.91 Bulletin 91/19**

(84) Etats contractants désignés :
**DE ES GB IT**

(56) Documents cités :
**EP-A- 0 113 859**
**DE-A- 2 136 832**
**DE-A- 3 245 770**
**DE-A- 3 524 309**
**US-A- 1 440 576**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Buferne, Pierre**
**33 route de Versailles "La Corbellerie"**
**F-78560 Le Port Marly (FR)**

(74) Mandataire : **Durand, Yves Armand Louis et al**
**CABINET WEINSTEIN 20, Avenue de**
**Friedland**
**F-75008 Paris (FR)**

EP 0 320 327 B1

Jouve, 18, rue Saint-Denis, 75001 PARIS

## Description

La présente invention concerne un dispositif de fixation d'une pièce mécanique à une autre pièce mécanique présentant entre elles un jeu d'assemblage.

Un tel dispositif trouve notamment application pour la fixation d'accessoires tels que compresseurs de réfrigération, alternateurs, pompes hydrauliques ou carters de moteurs thermiques de véhicules automobiles.

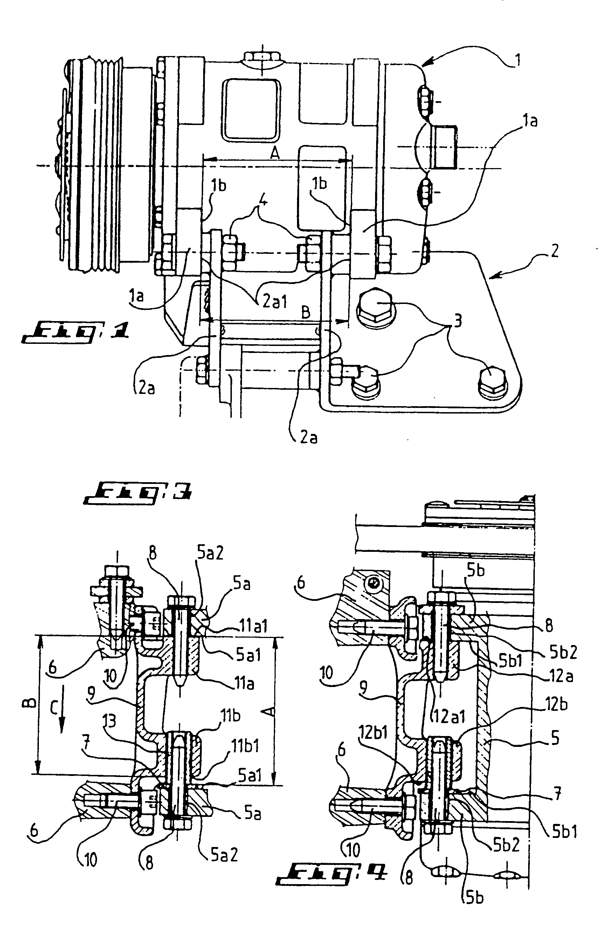

La figure 1 représente un mode de réalisation connu de fixation d'un compresseur de réfrigération 1 d'un moteur thermique au carter de celui-ci. Le dispositif connu de fixation comprend deux brides ou pattes parallèles de fixation 1a solidaires du compresseur 1 et comportant respectivement deux faces internes d'appui parallèles 1b se faisant face d'une distance ou cote A. Le dispositif de fixation comprend de plus un support mécano-soudé 2 solidaire du carter moteur (non représenté) par des vis de fixation 3 et comportant deux plaques rigides parallèles de support 2a présentant deux faces externes opposées d'appui sensiblement parallèles 2a1 séparées l'une de l'autre d'une distance ou cote B. La cote A entre les brides 1a du compresseur 1 est, pour des raisons d'assemblage des plaques de support 2a entre les brides 1a, nécessairement supérieure à la cote B entre les faces externes 2a1 respectivement des deux plaques de support 2a. Les deux brides 1a sont fixées respectivement aux deux plaques de support 2a à l'aide de boulons de fixation coaxiaux 4 assurant un serrage énergique des faces internes d'appui 1b respectivement contre les faces externes 2a1 des plaques de support 2a.

Cependant, dans la mesure où la cote A doit être supérieure à la cote B, l'effort de serrage des boulons de fixation 4 déforme les cotes A et B jusqu'au contact des brides de serrage 1a aux pattes de fixation 2a pour obtenir un serrage positif. Cet effort met ainsi en contrainte les brides du compresseur et les plaques de fixation 2a avec risque de rupture de ces pièces en fatigue.

La présente invention a pour but d'éliminer l'inconvénient ci-dessus du dispositif connu en proposant un dispositif de fixation d'une première pièce comportant au moins deux pattes de fixation sensiblement parallèles, respectivement à faces internes d'appui en regard l'une de l'autre, à une seconde pièce à deux faces externes parallèles opposées disposées entre les deux faces d'appui des pattes de fixation avec jeu d'assemblage, et comprenant au moins deux vis de fixation respectivement des deux pattes de fixation à la seconde pièce et caractérisé en ce qu'il comprend une douille à filetages intérieur et extérieur de pas respectivement opposés interposée entre les filets de l'une des vis de fixation et un taraudage de la seconde pièce s'adaptant au filetage extérieur de la douille, le filetage intérieur de la douille s'adaptant au filetage de la vis avec jeu réduit de façon que la douille puisse se déplacer axialement dans le taraudage lors de l'opération de serrage de la vis de fixation pour venir en aboutement par l'une de ses deux extrémités libres contre la face interne d'appui de la patte de fixation traversée par ladite vis de fixation.

US-A-1 440 576 décrit un dispositif mécanique de fixation de deux parties 2, 4 comprenant un certain de douilles 9 filetées extérieurement et vissées dans des taraudages correspondants de la partie 4 jusqu'à ce que la partie d'extrémité 8 de chaque douille 9 se loge dans un lamage correspondant 7 dans la face interne sensiblement plane de la partie 2. Des boulons 5 sont insérés ensuite respectivement au travers d'alésages pratiqués dans la partie 2 et les douilles 9 pour fixer des écrous/contre-écrous de serrage 10, 11. Cependant, ce dispositif connu est destiné à résoudre le problème de fixation des deux parties 2, 4 dont les surfaces ne sont pas rigoureusement planes. Ce problème connu n'a donc rien à voir avec celui de l'invention selon lequel on cherche à éviter les risques de rupture en fatigue des brides du compresseur et des plaques de fixation susmentionnées lorsque les boulons de fixation sont serrés. De plus, le dispositif connu n'est pas d'une conception permettant de résoudre le problème à la base de l'invention.

DE-A-2 136 832 décrit une douille à filetages intérieur et extérieur de pas respectivement opposés de façon à empêcher le dévissage de la douille de son logement correspondant d'une pièce lors du desserrage d'une vis de fixation vissée dans le filetage intérieur de la douille. Cependant, ce document antérieur ne révèle pas du tout l'application de cette douille pour résoudre le problème à la base de l'invention.

Selon une caractéristique de l'invention, la douille comprend une forme d'entraînement, telle qu'une fente, pour sa mise en place, avant assemblage de la première pièce à la seconde pièce, dans le taraudage de la seconde pièce de façon que l'extrémité libre précitée de la douille se trouve sensiblement au niveau de l'ouverture du taraudage débouchant à la face externe de la seconde pièce en regard de la face d'appui précitée de la patte de fixation.

Selon encore une autre caractéristique de l'invention, la seconde vis de fixation est coaxiale à la première vis de fixation et assure fermement le maintien de l'autre face externe de la seconde pièce contre la face d'appui de la seconde patte de fixation lors de son serrage.

L'invention concerne également une douille utilisée notamment pour la fixation d'une première pièce, telle qu'un accessoire, à une deuxième pièce, telle qu'un support, les deux pièces présentant entre elles un jeu d'assemblage et caractérisée en ce qu'elle comprend des filetages intérieur et extérieur respectivement de pas opposés, le filetage intérieur de la douille étant usiné de façon à présenter un jeu réduit avec le filetage correspondant d'une vis de fixation de la première pièce à la deuxième pièce.

Selon une caractéristique de l'invention, la douille comprend, à l'une de ses deux extrémités libres, une forme d'entraînement, telle qu'une fente, pour sa mise en place dans un taraudage de la seconde pièce.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

La figure 1 représente un dispositif connu de fixation d'un compresseur de réfrigération au carter d'un moteur thermique ;

La figure 2 représente le dispositif de fixation de l'invention d'un compresseur de réfrigération au carter d'un moteur thermique ;

La figure 3 est une vue en coupe suivant la ligne III-III de la figure 2 ;

La figure 4 est une vue en coupe suivant la ligne IV-IV de la figure 2 ; et

La figure 5 est une vue agrandie de la douille conforme à l'invention.

Le dispositif de fixation conforme à l'invention va être décrit en application à la fixation d'un compresseur de réfrigération au carter d'un moteur thermique d'un véhicule automobile, mais il est bien entendu que ce dispositif peut s'appliquer à la fixation d'autres accessoires divers tels que par exemple alternateurs, pompes hydrauliques de moteurs thermiques.

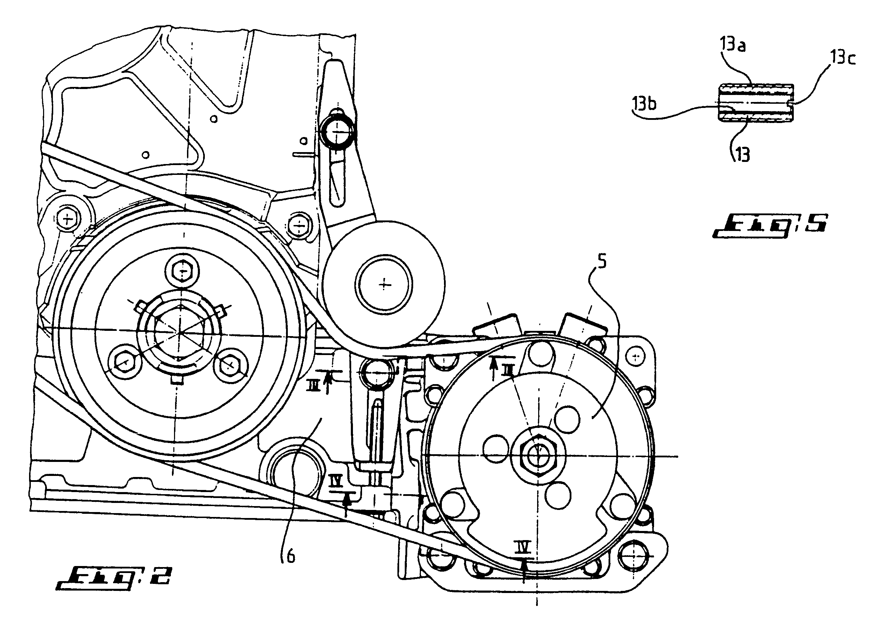

Comme représenté aux figures 2 à 4, la référence 5 désigne un compresseur de réfrigération d'un moteur thermique fixé rigidement au carter cylindres 6 d'un moteur thermique de véhicule automobile.

Le compresseur 5 comprend deux paires de pattes de fixation 5a, 5b solidaires de celui-ci. Les deux pattes de fixation de chaque paire sont sensiblement parallèles et comportent respectivement deux faces internes d'appui parallèles 5a1 ; 5b1 en regard l'une de l'autre, l'une des faces d'appui comportant, solidaire de celle-ci par exemple par soudage, une plaque d'appui en forme de rondelle 7. La face d'appui 5a1 ; 5b1 de chaque paire de pattes de fixation est distante de la face interne d'appui de la plaque d'appui 7 suivant une cote A. Les deux pattes de fixation de chaque paire comprennent respectivement deux trous traversants coaxiaux 5a2 ; 5b2 pour le passage de vis de fixation 8 du compresseur 5 au carter 6, les têtes des vis de fixation 8 étant en appui, lorsque serrées, respectivement sur les faces externes des pattes de fixation 5 opposées aux faces d'appui 5a1 ; 5b1.

Les pattes de fixation 5 sont fixées au carter 6 par l'intermédiaire d'un support commun 9 lui-même solidaire du carter 6 par l'intermédiaire de vis de fixation 10. Le support 9 comprend deux paires de brides 11a, 11b ; 12a, 12b pour la fixation respectivement des deux paires de pattes de fixation 5a ; 5b au support 9. Les deux brides 11a, 11B ; 12a, 12b de chaque paire sont sensiblement parallèles et ont leurs faces externes parallèles opposées 11a1, 11b1 ; 12a1, 12b1 distantes l'une de l'autre suivant une cote B inférieure à la cote A. Les faces externes 11a1 et 12a1 respectivement des brides 11a et 12a sont usinées tandis que les faces externes opposées 11b1 et 12b1 respectivement des brides 11b et 12b viennent de fonderie. Les deux brides 11a, 11b ; 12a, 12b comprennent respectivement deux trous taraudés coaxiaux, le taraudage de la bride 11a ou 12a s'adaptant au filetage de la vis de fixation associée 8.

Le dispositif de fixation conforme à l'invention comprend une douille 13 représentée en figure 5 et comprenant un filetage extérieur 13a s'adaptant au taraudage de la bride 11b ou 12b et un filetage intérieur 13b, pratiqué dans le perçage traversant de la douille, et s'adaptant au filetage de la vis de fixation associée 8 avec un jeu réduit. Le pas des hélices du filetage intérieur est de sens opposé au pas des hélices du filetage extérieur. Par exemple, la douille 13 a un filetage extérieur 13a du type pas à gauche tandis que le filetage intérieur 13b est du type pas à droite. La douille 13 comprend de plus une forme d'entraînement 13c, telle qu'une fente, pour la mise en place de la douille dans le taraudage de la bride 11b ou 12b.

Le fonctionnement du dispositif de fixation de l'invention résulte déjà en partie de la description qui en a été faite ci-dessus et va être maintenant expliqué en détail.

La douille 13 est tout d'abord mise en place, à l'aide d'un tournevis inséré dans la fente 13c, dans le taraudage de la bride 11b ou 12b jusqu'à ce que la douille ait son extrémité libre comportant la fente 13c sensiblement au même niveau que l'ouverture du trou taraudé de la bride 11b ou 12b. Les pattes de fixation 5a ou 5b sont amenées en position d'assemblage de façon que les alésages 5a2 ou 5b2 et les taraudages respectivement des brides 11a, 11b ou 12a, 12b soient sensiblement coaxiaux. Une vis de fixation 8 est alors introduite dans l'alésage 5a2 ou 5b2 et vissée dans le taraudage de la bride 11a ou 12a et serrée jusqu'à ce que la face interne 11a1 ou 12a1 soit fermement maintenue en contact contre la face externe usinée de la bride 11a ou 12a. A cette position de montage, il subsiste entre la face interne de la plaque d'appui 7 et la face externe 11b1 ou 12b1 un espace correspondant au jeu d'assemblage égal à la différence entre la cote A et la cote B. Une autre vis 8 est ensuite introduite dans l'alésage 5a2 ou 5b2 et vissée dans le taraudage de la douille 13. Le jeu réduit entre le filetage intérieur 13b de la douille 13 et le filetage de cette vis 8 assure un frottement de la douille sur cette vis 8 permettant la rotation de la douille 13 en même temps que la rotation de la vis. La douille 13, entraînée en rotation, se déplace axialement dans le taraudage de la bride 11b ou 12b dans le sens de la flèche C et vient en aboutement par son extrémité libre comportant la fente 13c contre la face interne de la plaque d'appui 7 lors du serrage définitif de la vis de fixation 8. Le déplacement axial de la douille 13 a donc permis de supprimer le jeu entre les cotes A et B amenant le cote des faces à assembler à égalité sans contraintes.

La douille utilisée dans le dispositif de fixation de l'invention a ainsi pour avantage de réduire les contraintes de fixation des pattes de fixation de l'accessoire à assembler sur un moteur, dues à l'intervalle existant entre les faces d'appui du support et les faces d'appui de l'accessoire et résultant des tolérances de fabrication à la fois du support et de l'accessoire. On obtient ainsi une fixation rigide de l'accessoire au support, supprimant automatiquement le jeu précité sans cales de réglage et sans contraintes. De plus, il n'est pas nécessaire d'usiner la face 11b1 ou 12b1 située en regard de la face d'appui de la plaque 7.

## Revendications

1. Dispositif de fixation d'une première pièce (5) comportant au moins deux pattes de fixation (5a ; 5b) sensiblement parallèles, respectivement à deux faces internes d'appui (5a1 ; 5b1) en regard l'une de l'autre, à une seconde pièce (9) à deux faces externes parallèles opposées (11a1, 11b1 ; 12a1, 12b1) disposées entre les deux faces d'appui des pattes de fixation avec jeu d'assemblage, ledit dispositif comprenant au moins deux vis de fixation (8) respectivement des deux pattes de fixation à la seconde pièce ; caractérisé en ce qu'il comprend une douille (13) à filetages intérieur (13b) et extérieur (13a) de pas respectivement opposés interposée entre les filets de l'une des vis de fixation (8) et un taraudage de la seconde pièce (9) s'adaptant au filetage extérieur (13a) de la douille (13), le filetage intérieur (13b) de la douille s'adaptant au filetage de la vis (8) avec un jeu réduit de façon que la douille (13) puisse se déplacer axialement dans le taraudage lors de l'opération de serrage de la vis de fixation (8) pour venir en aboutement par l'une de ses deux extrémités libres contre la face interne d'appui de la patte de fixation (5a ; 5b) traversée par ladite vis de fixation (8).

2. Dispositif selon la revendication 1, caractérisé en ce que la douille (13) précitée comprend une forme d'entraînement (13c), telle qu'une fente, pour sa mise en place, avant assemblage de la première pièce (5) à la seconde pièce (9), dans le taraudage de la seconde pièce de façon que l'extrémité libre précitée de la douille (13) se trouve sensiblement au niveau de l'ouverture du taraudage débouchant à la face externe (11b1 ; 12b1) de la seconde pièce (9) en regard de la face d'appui précitée de la patte de fixation (5a ; 5b).

3. Dispositif selon la revendication 1 ou 2, caractérisé en ce que la seconde vis de fixation (8) précitée est coaxiale à la première vis de fixation et assure fermement le maintien de l'autre face externe de la seconde pièce (9) contre la face d'appui de la seconde patte de fixation lors du serrage de la seconde vis.

4. Dispositif selon l'une des revendications précédentes, caractérisé en ce que la première pièce (5) précitée est un accessoire tel que compresseur, alternateur, pompe hydraulique d'un moteur thermique de véhicule automobile et en ce que la seconde pièce (9) précitée est un support solidaire du carter (6) du moteur.

5. Douille utilisée pour la fixation d'une première pièce (5), telle qu'un accessoire, à une deuxième pièce (9), telle qu'un support, les deux pièces présentant entre elles un jeu d'assemblage, caractérisée en ce qu'elle comprend des filetages intérieur (13b) et extérieur (13a) respectivement de pas opposés, le filetage intérieur (13b) de la douille (13) étant usiné de façon à présenter un jeu réduit avec le filetage correspondant d'une vis de fixation (8) de la première pièce à la deuxième pièce.

6. Douille selon la revendication 5, caractérisée en ce qu'elle comprend, à l'une de ses deux extrémités libres, une forme d'entraînement (13c) telle qu'une fente, pour sa mise en place dans un taraudage de la seconde pièce (9).

## Claims

1. A device for fastening a first part comprising at least two substantially parallel fastening lugs (5a ; 5b), respectively with two inner bearing faces (5a1 ; 5b1) opposite to each other, to a second part (9) with two opposite parallel outer faces (11a1, 11b1 ; 12a1, 12b1) disposed between the two bearing faces of the fastening lugs with an assembling backlash, said device comprising at least two screws (8) for the fastening respectively of the two fastening lugs to the second part, characterized in that it comprises a bush (13) with inner (13b) and outer (13a) threads with opposite pitches, interposed between the threads of one of the fastening screws (8) and an inside thread of the second part (9) matching with the outer thread (13a) of the bush (13), the inner thread (13b) of the bush matching with the thread of the screw (8) with a reduced backlash in order that the bush (13) can move axially in the inside thread during the operation of tightening of the fastening screw (8) so as to abut at one of its two free ends against the inner bearing face of the fastening lug (5a ; 5b) through which the fastening screw (8) passes.

2. A device according to claim 1, characterized in that said bush (13) comprises a drive configuration (13c), such as a slot, for the positioning thereof, before assembling the first part (5) to the second part (9), in the inside thread of the second part so that said free end of the bush (13) be substantially level with the aperture of the inside thread opening onto the outer face (11b1 ; 12b1) of the second part (9) opposite to said bearing face of the fastening lug (5a ; 5b).

3. A device according to claim 1 or 2, characterized in that the second fastening screw (8) is in coaxial relationship with the first fastening screw and holds firmly the other outer face of the second part (9) against the bearing face of the second fastening lug during the tightening of the second screw.

4. A device according to any preceeding claims, characterized in that said first part (5) is an accessory such as a compressor, an alternator, a hydraulic pump of a thermal engine of an automotive vehicle and in that said second part (9) is a support solid with the crankcase (6) of the engine.

5. A bush used for the fastening of a first part (5), such as an accessory, to a second part (9), such as a support, the two parts having between them an assembling backlash, characterized in that it comprises inner (13b) and outer (13a) threads with opposite pitches, the inner thread (13b) of the bush (13) being machined so as to have a reduced backlash with the corresponding thread of a screw (8) for fastening the first part to the second part.

6. A bush according to claim 5, characterized in that it comprises, at one of its two free ends, a drive configuration (13c) such as a slot, for its positioning in an inside thread of the second part (9).

**Ansprüche**

1. Vorrichtung zur Befestigung eines wenigstens zwei etwa parallele Befestigungsansätze (5a ; 5b) jeweils mit zwei einander gegenüberliegenden inneren Abstützflächen (5a1 ; 5b1) aufweisenden ersten Werstücks (5) an einem zweiten Werkstück (9) mit zwei mit einem Zusammenbauspiel zwischen den beiden Abstützflächen der Befestigungsansätze angeordneten entgegengesetzten parallelen äusseren Flächen (11a1, 11b1 ; 12a1, 12b1), wobei die besagte Vorrichtung wenigstens zwei Schrauben (8) zur Befestigung jeweils der beiden Befestigungsansätzen an das zweite Werkstück aufweist ; dadurch gekennzeichnet, dass es eine Hülse (13) mit Innengewinde (13b) und Aussengewinde(13a) mit jeweils entgegengesetzten Gewindesteigungen aufweist, welche zwischen den Schraubengängen der einen Befestigungsschraube (8) und einem sich an das Aussengewinde (13a) der Hülse (13) anpassenden Innengewinde des zweiten Werkstücks (9) zwischengeschaltet ist, wobei das Innengewinde (13b) der Hülse sich mit einem geringen Spiel an das Gewinde der Schraube (8) anpasst, so dass die Hülse (13) sich in dem Innengewinde während des Anziehungsvorgangs der Befestigungsschraube (8) axial bewegen kann, um mit einem ihrer beiden freien Enden zum Anstoss an die innere Abstützfläche des durch die besagte Befestigungsschraube (8) durchsetzten Befestigungsansatzes (5a ; 5b) zu kommen.

2. Vorrichtung nach Anspruch 1, dadurch gekennzeichnet, dass die vorgenannte Hülse (13) eine Mitnehmerausgestaltung (13c), wie einen Schlitz aufweist, zu ihrer Instellungbringen, vor dem Anfügen des ersten Werkstücks (5) an das zweite Werkstück (9), in das Innengewinde des zweiten Werkstücks, so dass das vorgenannte freie Ende der Hülse (13) sich im wesentlichen in der Höhe der in die Aussenseite (11b1 ; 12b1) des zweiten Werkstücks (9) gegenüber der vorgenannten Abstützfläche des Befestigungsansatzes (5a ; 5b) mündenden Oeffnung des Innengewindes befindet.

3. Vorrichtung nach Anspruch 1 oder 2, dadurch gekennzeichnet, dass die vorgenannte zweite Befestigungsschraube (8) koaxial zur ersten Befestigungsschraube ist und die Halterung der anderen Aussenseite des zweiten Werkstücks (9) an der Abstützfläche des zweiten Befestigungsansatzes währen des Anziehens der zweiten Schraube kräftig bewirkt.

4. Vorrichtung nach einem der vorangehenden Ansprüche, dadurch gekennzeichnet, dass das vorgenannte erste Werkstück (5) ein Zubehörteil, wie ein Verdichter, ein Wechselstromerzeuger, eine Hydropumpe einer Wärmekraftmaschine eines Kraftfahrzeugs ist und dass das vorgenannte zweite Werkstück (9) ein mit dem Gehäuse (6) der Kraftmaschine fest verbundener Träger ist.

5. Zur Befestigung eines ersten Werkstücks (5), wie eines Zubehörteils, an ein zweites Werkstück (9), wie einen Träger, verwendete Hülse, wobei beide Werkstücke zwischen einander ein Zusammenbauspiel aufweisen, dadurch gekennzeichnet, dass sie ein Innengewinde (13b) und ein Aussengewinde (13a) jeweils mit entgegengesetzten Gewindesteigungen umfasst, wobei das Innengewinde (13b) der Hülse (13) derart bearbeitet ist, dass es ein geringes Spiel zu dem entsprechenden Gewinde einer Schraube (8) zur Befestigung des ersten Werkstücks an dem zweiten Werkstück aufweist.

6. Hülse gemäss Anspruch 5, dadurch gekennzeichnet, dass sie an einem ihrer beiden freien Enden eine Mitnahmeausbildung (13c), wie einen Schlitz zu ihrer Instellungbringen in einem Innengewinde des zweiten Werkstücks (9) aufweist.

Fig. 1

Fig. 3

Fig. 4

Fig.5

Fig.2